Europäisches Patentamt

European Patent Office

Office européen des brevets

(19)

(11) Publication number: **0 425 414 A2**

(12)

# EUROPEAN PATENT APPLICATION

(21) Application number: 90480142.0

(22) Date of filing: 21.09.90

(51) Int. Cl.5: **G06F 9/44, G06F 15/40**

(30) Priority: 23.10.89 US 425639

(43) Date of publication of application:
02.05.91 Bulletin 91/18

(84) Designated Contracting States:
DE FR GB

(71) Applicant: **International Business Machines Corporation**
**Old Orchard Road**
**Armonk, N.Y. 10504(US)**

(72) Inventor: **Abraham, Robert L.**
**1993 Willeo Creek Point**
**Marietta, Georgia 30068(US)**
Inventor: **Baker, Briana J.**
**1934 Ivy Glen Drive**
**Smyrna, Georgia 30082(US)**
Inventor: **Fath, Janet L.**
**1323 Chalmette Drive**
**Atlanta, Georgia 30306(US)**
Inventor: **Krosner, Stephen P.**
**2734 Eagle Ridge Road**
**Marietta, Georgia 30062(US)**
Inventor: **Priven, Michael P.**
**698 Jenny Mill Court**
**Marietta, Georgia 30068(US)**

(74) Representative: **Bonneau, Gérard**
**Compagnie IBM France Département de Propriété Intellectuelle**
**F-06610 La Gaude(FR)**

(54) Method and apparatus for processing a complex hierarchy of data objects.

(57) The method and apparatus of the present invention may be utilized to process a complex hierarchy of interrelated data objects so that a system user may rapidly and efficiently traverse the hierarchy from a first selected data object within the hierarchy to a second selected data object without the necessity of manually returning to a known point or "root" within the hierarchy. Each time the system user traverses the hierarchy from a known point to a selected data object (52), the data objects encountered during the traverse are stored (54), along with a set of actions which were necessary to traverse the hierarchy to that point. Upon an indication by the user that a second selected data object is required (56), the system will automatically display (58) the existing path from the known point within the hierarchy to the selected data object in current utilization and the user is then permitted to alter the data objects and actions contained therein to reflect a "path" to a second data object. Thereafter, the system will automatically traverse the complex hierarchy along this newly created path to arrive at the second selected data object. In one embodiment of the present invention, a selected path to a known data object may be saved or "bookmarked" to permit the user to selectively return to that particular data object at any time in the future.

Fig. 5

## METHOD AND APPARATUS FOR PROCESSING A COMPLEX HIERARCHY OF DATA OBJECTS

The present invention relates in general to the field of information processing systems and methods and in particular to information processing systems and methods for use with a complex hierarchy of interrelated data objects. Still more particularly, the present invention relates to systems and methods for efficiently traversing a complex hierarchy of interrelated data objects.

The increasingly complex nature of data processing systems utilized today has necessitated the creation of substantially more complex hierarchies of interrelated data objects for use therein. Such complex hierarchies or "trees" are often utilized to correlate and organize multiple data objects, which may comprise individual documents, applications or other complex data structures within a single complex application program. As these hierarchies become increasingly complex, the simple task of traversing from one data object to a second data object increases in difficulty at a geometric rate. For example, known systems with only moderately complex data object structures typically traverse from one data object to a second data object by returning to a known point or "root" within the hierarchy and then following the system rules to traverse to the second data object.

Examples of systems utilizing such techniques exist in many forms in the prior art. A common form is often referred to as "paging" or '"scrolling." This technique permits a system user to sequentially traverse from one data object to a next data object within the sequence or to a predetermined data object which exists within the level of the hierarchy at which the system is operating (i.e., page, paragraph, or sentence). One example of such a technique is disclosed in U.S. Patent No. 4,744,046 issued May 10, 1988 and assigned to Zenith Electronics Corporation. Another example of such a system is disclosed in U.S. Patent No. 4,648,037, issued to James A. Valentino and assigned to Metropolitan Life Insurance Company of New York. The Valentino patent discloses a computer based method and apparatus which enables an employee to access information concerning savings plans, retirement plans, group life insurance or the like. Each of the data objects which is accessible by the employee is listed within a simple hierarchy of such data objects and may be accessed randomly or in sequence utilizing the technique discussed above.

A second technique which gives the appearance of permitting a user to traverse directly from one data object to a second data object is disclosed in IBM Technical Disclosure Bulletin Volume 25, Number 6, November 1982, entitled "Menu Bypass During Display Index of Diskette Contents." This technique discloses a menu bypass technique in which a menu-driven keyboard/display word processing system is modified to permit the operator to select a function from a menu by the utilization of a keystroke abbreviation without the necessity of displaying the menu system. However, this technique, as the previously described techniques, merely traverses from one point within a hierarchy to a second point by following system rules from a known point, or sequentially within a given level of the hierarchy.

The design of complex object oriented applications which utilize the object/action paradigm for interaction can easily result in a very complex hierarchy of data objects which must be traversed by the user in order to utilize the application. Since these applications are user driven, it would be most efficient for the application designer to permit the user to move efficiently and rapidly through the complex hierarchy without having to continually return to a known point within the hierarchy in order to choose a path to a new data object. Therefore, it should be obvious that a need exists for a system and method whereby an information processing system user may rapidly and efficiently traverse a complex hierarchy of data objects from a first selected data object to a second selected data object without the necessity of manually entering the keystrokes necessary to return to a known portion of the hierarchy and thereafter traverse to the desired data object.

It is therefore one object of the present invention to provide an improved information processing system and method.

It is another object of the present invention to provide an improved information processing system and method for use with a complex hierarchy of interrelated data objects.

It is yet another object of the present invention to provide an improved information processing system and method which permits efficient traversing within a complex hierarchy of interrelated data objects from a first selected data object to a second selected data object.

The foregoing objects are achieved as is now described. The method and apparatus of the present invention may be utilized to process a complex hierarchy of interrelated data objects so that a system user may rapidly and efficiently traverse the hierarchy from a first selected data object within the hierarchy to a second selected data object without the necessity of manually returning to a known point or "root" within the hierarchy. Each time the system user traverses the hierarchy from a known point to a selected data object, the data objects encountered during the traverse are stored, along with a set of actions which were necessary to traverse the hierarchy to that point. Upon an indication by the user that a second selected data object is required, the system will automatically display the existing path from the known point within the hierarchy to the selected data object in current utilization and the user is then permitted to alter the data objects and actions contained therein to reflect a "path" to a second data object. Thereafter, the system will automatically traverse the complex hierarchy along this newly created path to arrive at the second selected data object. In one embodiment of the present invention, a selected path to a known data object may be saved or "bookmarked" to permit the user to selectively return to that particular data object at any time in the future.

Figure 1 is a pictorial representation of a computer system which may be utilized with the method and apparatus of the present invention;

Figure 2 is a pictorial representation of a complex hierarchy of data objects interrelated by a plurality of known relationships which may be processed in accordance with the method of the present invention;

Figure 3 is a pictorial representation of a computer display screen depicting an action bar and pop-up path screen which may be utilized in accordance with the method of the present invention;

Figure 4 is a pictorial representation of the computer display screen of Figure 3, after modifications thereto, in accordance with the method of the present invention; and

Figure 5 is a high level flow chart depicting the operation of the method of the present invention.

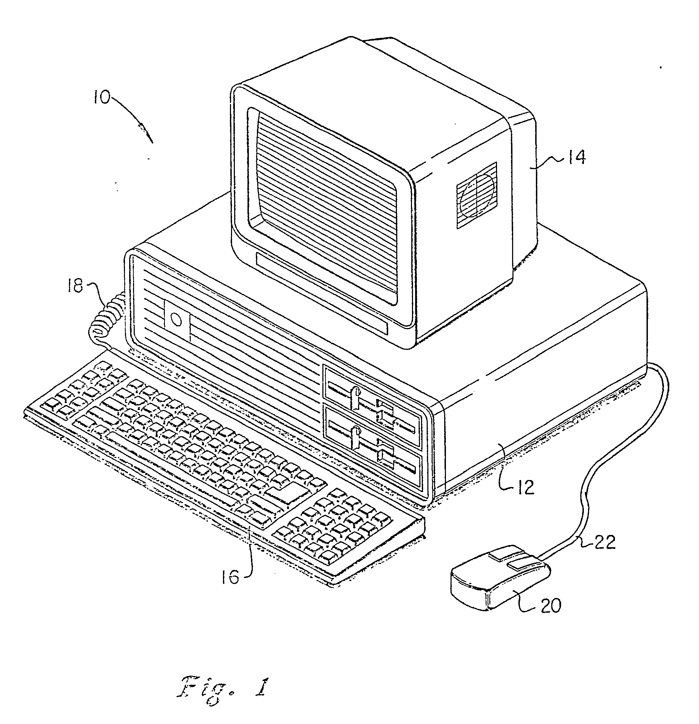

With reference now to the figures and in particular with reference to Figure 1, there is depicted a pictorial representation of a computer system 10 which may be utilized with the method of the present invention. As may be seen, computer system 10 includes a processor 12 which preferably includes a graphics processor, memory device and a central processor (not shown). Coupled to processor 12 is video display 14 which may be implemented utilizing either a color or monochromatic monitor, in a manner well known in the art. Also coupled to processor 12 is keyboard 16. Keyboard 16 preferably comprises a standard computer keyboard which is coupled to processor 12 by means of cable 18.

Also coupled to processor 12 is a graphical pointing device, such as mouse 20. Mouse 20 is coupled to processor 12, in a manner well known in the art, via cable 22. Upon reference to the foregoing, those skilled in the art will appreciate that computer 10 may be implemented utilizing a so-called personal computer, such as the PS/2 computer manufactured by International Business Machines Corporation of Armonk, New York.

Referring now to Figure 2, there is depicted a pictorial representation of a complex hierarchy of data objects interrelated by a plurality of known relationships which may be processed in accordance with the method of the present invention. As may be seen, the complex hierarchy depicted is in a form commonly referred to as a "tree" and contains a large number of data objects, each of which includes a single "path" from root node A 24. In accordance with the object/action paradigm technique of interaction within such complex hierarchies, a user will typically traverse the hierarchy from one data object to another data object by specifying an object/action pair. In the depicted example, the data objects within the complex hierarchy of Figure 2 are all interrelated by one of two actions. For example, the "open" action will result in a traverse down the tree from root node data object A 24 to an adjacent data object such as data object B 26. Thus, the user may choose from data object A the object/action pair "object B/action open." This will result in the traversing within the complex hierarchy from data object A 24 to data object B 26. Similarly, the example disclosed in the present invention utilizes the action "exit" to indicate a traverse up the tree toward data object 24.

Thus, in accordance with methods well known in the prior art, a user desiring to operate within data object D 30 would begin at data object A 24 and select the object/action data pair "data object B 26/action open." Next, the user would select the data object action pair "data object D 30/action open" and thereafter would have available data object D 30, for visual display within computer system 10 and for manipulation of the contents thereof.

At this point, if the system user desires to work within data object G 36, utilizing known prior art techniques, the user must select from data object D 30 the object/action pair "data object B 26/action exit and then similarly select the object/action pair "data object A 24/action exit." At this point, the hierarchy would be traversed downward to data object G 36 by selecting the object/action pairs "data object C 28/action open" and thereafter "data object G 36/action open." In this manner, those ordinarily skilled in the art will appreciate that the process of traversing from data object D 30 to data object G 36 can be a complex and time consuming matter in hierarchies which are substantially more complicated than the example illustrated in Figure 2 herein.

With reference now to Figure 3, there is depicted a pictorial representation of a computer display screen **38** which depicts an action bar **40** and a pop-a path screen **42** which may be utilized in accordance with the method of the present invention. As is illustrated, action bar **40** preferably includes a plurality of actions which may be selected by the system user. For example, "open" and "exit" are actions which have been discussed above and which may be utilized to traverse the complex hierarchy illustrated in **Figure 2** in a downward and upward direction respectively.

Also listed within action bar **40** are two additional actions, "bookmark" and "resume." In accordance with an important aspect of the present invention, the bookmark action may be utilized to mark or identify a particular data object within the complex hierarchy of **Figure 2** so that this data object may be returned to rapidly and efficiently upon completion of a future task. Similarly, the resume action may be utilized by the user of the system in the present invention to select a data object which has been previously bookmarked in accordance with the above-description.

As is illustrated in **Figure 3**, pop-up path screen **42** preferably includes two column headings therein. Object column heading **44** and action column heading **46** correspond to the above-referenced description of manipulation of a complex hierarchy objects utilizing the object/action paradigm. As depicted within pop-up path screen **42** the process begins with data object A and the action selected is open on data object B. Next, data object D is selected in conjunction with an open action. The contents of pop-up path screen **42** thus correspond the traversing of the complex hierarchy of **Figure 2** from data object A **24** through data object B **26** to data object D **30**, in the manner described above.

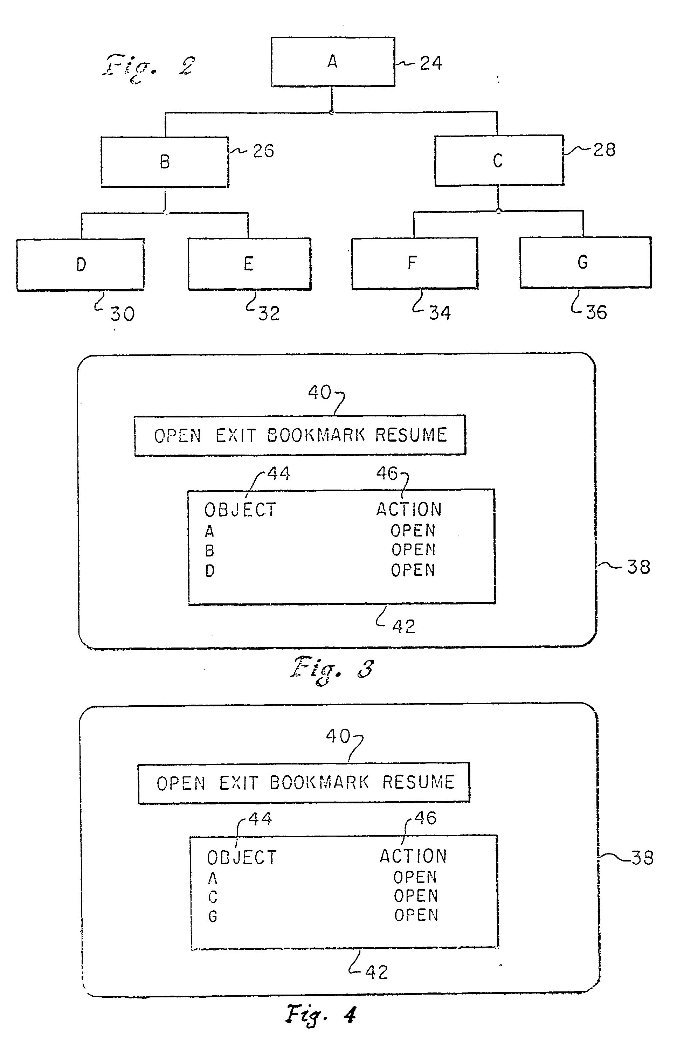

Referring now to **Figure 4**, there is depicted a pictorial representation of computer display screen **38** of **Figure 3**, after modifications thereto, in accordance with the method of the present invention. As is illustrated, pop-up path screen **42** still includes object column heading **44** and action column heading **46**; however, the contents of object column heading **44** have been modified in accordance with the method of the present invention. Upon an indication that the system user desires to traverse to a second selected data object, the screen depicted in **Figure 3** will be displayed and the user will be prompted to make those changes indicative of the data object selected for processing. Thus, if the user has decided to work within data object G **36** (see **Figure 2**) the data objects listed within object column heading **44** of pop-up path screen **42** of **Figure 4** are altered to indicate a path from data object A **24** through data object C **28** to data object G **36**. Those skilled in the art will appreciate that the entries within action column heading **46** will remain identical to those within **Figure 3**, due to the fact that this particular election will result in a traverse down the complex hierarchy of **Figure 2**.

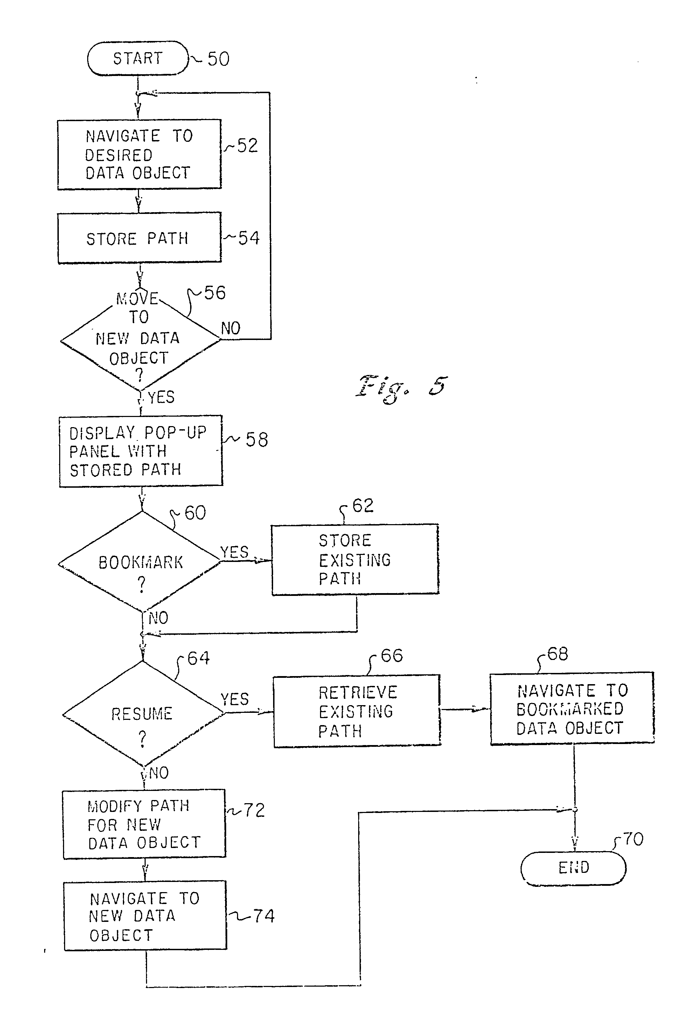

Finally, with reference to **Figure 5** there is depicted a high level flow chart depicting the operation of the method of the present invention. The process begins in block **50** and thereafter proceeds to block **52** which illus trates the navigation by the user to a desired data object within the complex hierarchy of **Figure 2**. Assuming this is the initial foray by the user into the complex hierarchy depicted, this process takes place utilizing those techniques well known in the prior art and discussed above. That is, the manual entry of a plurality of object/action paradigms to achieve a desired location within the selected data object. Next, in accordance with an important aspect of the present invention, the path taken by the user from the starting point within the complex hierarchy to the desired data object is stored, as depicted in block **54**.

Block **56** now illustrates a determination of whether or not the user desires to move to a new data object within the complex hierarchy and, if not, the process returns to block **52** to permit the user to continue to utilize the current data object. In the event the user has indicated a desire to move to a new data object, as determined by block **56**, then block **58** illustrates the display of a pop-up panel which includes the stored path utilized by the user to arrive at the current data object. Next, block **60** illustrates a determination of whether or not the user desires to "bookmark" the current data object, indicating his or her desire to return to this data object at some time in the future. If so, block **62** depicts the storing of the existing path to this data object from a known point within the complex hierarchy of **Figure 2**.

If the user does not desire to bookmark the existing data object, then block **64** indicates a determination of whether or not the user desires to resume work within a data object which has been previously bookmarked. If so, block **66** illustrates the retrieving of the existing path from a known point within the complex hierarchy of **Figure 2** to the desired data object. Next, block **68** depicts the navigation by the system to the bookmarked data object selected by the user. Thereafter, the process terminates, as depicted in block **70**.

Returning again to block **64**, in the event the system user does not desire to resume operations within a previously utilized data object having a stored path, then block **72** illustrates the modification of the path contained within the aforementioned pop-up panel to indicate a path from the known point within the complex hierarchy of **Figure 2** to the new data object selected. Having modified the stored path to reflect the new data object as the current destination, then block **74** illustrates the navigation by the system to the new data object and thereafter the process terminates, as indicated in block **70**.

Upon reference to the foregoing, those ordinarily skilled in the art will appreciate that the Applicants have provided a novel and useful method whereby a system user may efficiently process a highly complex hierarchy of interrelated data objects to permit selective traversal from one data object within the complex hierarchy to a second data object within the complex hierarchy without the necessity of manually retracing a path from a known point within the complex hierarchy to the existing data object and thereafter manually entering the necessary object/action paradigms to traverse the hierarchy to the next data object desired.

In this manner, a highly complex hierarchy of data objects may be rapidly and efficiently traversed from one unrelated data object within the hierarchy to another data object within the hierarchy, so long as the system user is aware of the relationships of the data objects within the hierarchy. Additionally, in a non-programmable terminal environment, this technique may be efficiently utilized due to the fact that only a single interrupt will be generated and transmitted to the host, rather than a large number of interrupts in the case of a highly complex hierarchy requiring a large number of actions.

**Claims**

1. A method in a computer system having a visual display for processing a complex hierarchy of data objects interrelated by a plurality of known relationships, said method being characterized in that it comprises the steps of:
displaying information related to a first selected data object within said visual display;
maintaining a first listing of said first selected data object and each data object located between said first selected data object and a known point within said complex hierarchy;
maintaining a second listing of a set of actions necessary to traverse said complex hierarchy from said known point to said first selected data object; and
selectively modifying said first listing and said second listing wherein said complex hierarchy may be automatically traversed from said first selected data object to a second selected data object by utilization of said modified first listing and said modified second listing.

2. The method according to Claim 1 characterized in that it further includes the step of displaying information related to said second selected data object within said visual display.

3. The method according to Claim 1 characterized in that it further includes the step of storing said first listing and said second listing prior to selective modification thereof wherein said complex hierarchy may be traversed to said first selected data object from said known point automatically.

4. An apparatus in an information processing system for processing a complex hierarchy of data objects interrelated by a plurality of known relationships, said apparatus being characterized in that it comprises :
a visual display for presenting information related to a selected data object; and
means for selectively traversing between said selected data object and a second noncontiguous data object within said complex hierarchy wherein said second data object is presented within said visual display.

5. The apparatus according to Claim 4 characterized in that it further includes means for displaying a listing of said selected data object and each data object located between said selected data object and a known point within said complex hierarchy.

6. The apparatus according to Claim 5 characterized in that it further includes means for specifying a set of actions necessary to traverse said complex hierarchy from said known point to said selected data object.

7. The apparatus according to Claim 5 characterized in that it further includes means for selectively altering said listing of said selected data object and each data object located between said selected data object and a known point within said complex hierarchy wherein said listing may be utilized by said means for selectively traversing between said selected data object and a second noncontiguous data object within said complex hierarchy.

8. The apparatus according to Claim 6 characterized in that it includes means for storing said listing of said selected data object and each data object located between said selected data object and a known point within said complex hierarchy and said set of actions necessary to traverse said complex hierarchy from said known point to said selected data object wherein a user may selectively traverse said complex hierarchy to said selected data object automatically.

Fig. 1

_Fig. 2_

A ~24

B ~26

C ~28

D
⌇30

E
⌇32

F
⌇34

G
⌇36

40⌐

OPEN EXIT BOOKMARK RESUME

⌐44      46⌐

OBJECT          ACTION
A               OPEN
B               OPEN
D               OPEN

~38

⌇42

_Fig. 3_

40⌐

OPEN EXIT BOOKMARK RESUME

⌐44          ⌐46

OBJECT          ACTION
A               OPEN
C               OPEN
G               OPEN

~38

⌇42

_Fig. 4_

7

START ~50

NAVIGATE TO
DESIRED
DATA OBJECT ~52

STORE PATH ~54

MOVE
TO
NEW DATA
OBJECT
? ~56

NO

YES

*Fig. 5*

DISPLAY POP-UP
PANEL WITH
STORED PATH ~58

BOOKMARK
? ~60

YES

STORE
EXISTING
PATH ~62

NO

RESUME
? ~64

YES

RETRIEVE
EXISTING
PATH ~66

NAVIGATE TO
BOOKMARKED
DATA OBJECT ~68

NO

MODIFY PATH
FOR NEW
DATA OBJECT ~72

END ~70

NAVIGATE TO
NEW DATA
OBJECT ~74